(19) Europäisches Patentamt
European Patent Office
Office européen des brevets

(11) **EP 2 955 807 A1**

(12) # EUROPEAN PATENT APPLICATION

(43) Date of publication:
**16.12.2015  Bulletin 2015/51**

(21) Application number: **14425073.5**

(22) Date of filing: **13.06.2014**

(51) Int Cl.:
*H02J 3/06* (2006.01)        *H02J 3/32* (2006.01)
*H02J 3/38* (2006.01)        *H02J 3/04* (2006.01)
*H02J 3/46* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Renergetica S.r.l.**
**16149 Genova (GE) (IT)**

(72) Inventors:
• **Pinceti, Paolo**
**I- 16010 Savignone (GE) (IT)**
• **Vanti, Maurizio**
**I- 16043 Chiavari (GE) (IT)**
• **Giannettoni, Marco**
**I-16036 Recco (GE) (IT)**
• **Traverso, Tommaso**
**I-16125 Genova (GE) (IT)**

(74) Representative: **Ferroni, Filippo et al**
**Metroconsult Genova S.r.l.**
**Via Palestro, 5**
**16122 Genova (IT)**

(54)    **Method and apparatus for controlling hybrid grids**

(57)    The invention relates to a method for controlling a hybrid grid (HG) that comprises a distribution network (1), conventional generators (G1-Gn) and renewable source generators (PV, WF), a Battery Energy Storage System (BESS), connected to the distribution network (1) for supplying electrical power to loads (LS1-LSn). The hybrid grid may be operated either connected to a main grid or off-grid.

The method provides for establishing an amount of power to be generated by the renewable source gener-ators (PhotoVoltaic Plant and/or Wind Farm), in function of the environmental conditions and the current load demand; thereafter a step of balancing the electric power supplied to the electrical distribution network (1) by the renewable source generator (PV1-PVn, W1-Wn) and by the conventional generator (G1-Gn), so as to maximize the energy production of renewable sources and to stabilize the network. A technological solution for carrying out the method is also provided.

Fig. 3

**Description**

The present invention relates to method and apparatus for controlling hybrid grids for the generation and distribution of electric power either when in parallel with a main grid or when off-grid.

Hybrid grids (hereafter also shortly HG) considered in this description and in the appended claims, are those which serve for providing electrical power either to specific users (such as industrial plants, mines, civil buildings and so on), either to other grids such as the main distribution grids of cities, rural regions and the like.

Hybrid grids are well known in the art and one of their main features is that they comprise both conventional generating systems (i.e. driven by internal combustion engines, gas or steam turbines, etc.) and renewable sources generating systems (e.g. photovoltaic, wind, hydroelectric, etc.); as a consequence their importance is steadily growing in the present times, as the environment attention is becoming one of the main issues in the power generation.

The hybrid grids normally involve the generation and distribution of electric power ranging from tenths of kW to tenths of MW: however the present invention may be applied to higher levels of power as well, arriving also to hundreds of MW.

Hybrid grids may be isolated or connected to a main grid: it should be observed that even in the case of connection to a main grid, a hybrid grid may become isolated because of possible network faults or failures of the main grid.

As a consequence hybrid grids must ensure effective working operation in any situations, that is to say either when they are stand-alone or when they are connected to another grid.

The fulfillment of this requirement involves rather complex technical issues which must be faced by the control system of the hybrid grid.

Indeed the control strategies necessary for regulating it differ when the hybrid grid is connected to a main grid or when it is isolated: the presence of a main grid makes the voltage and the frequency of the power system stable, whereas when it is isolated it can result weak and unstable so as to be subject to large voltage and frequency variations.

Therefore, the main purposes of a control system of hybrid grids connected to, or anyhow combined with, a main grid, are those of maximizing the energy production from renewable resources and to control the active and reactive power exchange, also called tie-line control.

On the contrary, when the hybrid grid is, or works, in an autonomous manner, that is to say when it is isolated from a main grid, the first goal of its control system is that of making the operation stable: this means that power generated by the generators (both conventional and renewable ones) must steadily match the load demand.

If this condition is complied with, then the voltage and frequency of the hybrid grid remain within acceptable limits even in case of sudden and large variations of generated power or load demand that may originate large voltage and frequency variation that jeopardizes the operation of the whole power generating system.

In order to control the different generation sources, a centralized control system (often referred to as Master Control or MC) is required that coordinates the operation of all the available sources; the master control systems are basically always used when several generators have to operate in parallel: this is the typical case of industrial power plants, off-shore platforms, mines, hospitals, etc.

The existing master controllers are not suitable to cope with renewable sources whose productions are largely unpredictable and cannot be regulated through external commands. This situation makes the hybrid grids much more complex than conventional grids, so that the control systems normally used for the latter cannot apply to hybrid grids.

However, since the importance of hybrid grids is becoming increasingly high and also the addition of renewable sources to conventional sources is becoming more and more appealing there is a strong need for a growth in the presence of renewable sources in the power production for reducing the energy production costs, the pollution and the $CO_2$ formation.

Until now the penetration rate of not-programmable renewable sources in isolated hybrid grids is normally kept below 20 %, because existing control systems cannot deal with the load variations introduced by renewable sources such as PV and wind. In this document the penetration rate is intended as the ratio between the power produced by renewable sources and the total produced power.

Since higher penetration rates come with advantages for the users, and the consequent cost reduction may make profitable some industrial or economic activities which are now not profitable due to the high energy costs, it would be desirable to have control systems of hybrid grids that allow to reach higher penetration rates of renewable sources.

This is all the more important for hybrid grids that are isolated, such as those located in remote sites like small islands, mountains, resorts, mines, and so on.

As a consequence it can be stated that the technical problem underlying the present invention is that of providing a method and an apparatus for controlling hybrid grids, which allow to overcome the drawbacks referred to above affecting the prior art.

In short this means that the control system of the present invention should achieve at least one of the following effects: stabilizing the hybrid grid also in case of large load and/or generation variations, maximizing the amount of energy production from renewable sources, reaching a penetration rate of renewable sources up to 90 % and above of total generated power.

The principle for solving the aforesaid technical problem is that of providing a control system that uses a mixed control strategy, partially distributed and partially centralized, thereby fitting optimally with the hybrid structure of the grid.

Moreover, with this approach it can be avoided to interact with the control systems of existing power generating plants, in the case of hybrid grids obtained with the addition of renewable sources to conventional generating apparatuses.

Anyway, the features of the present invention are specifically set forth in the appended claims; such features, the effects deriving therefrom and the advantages of the present invention will become more apparent from the following description of preferred and non limiting embodiments thereof, shown in the annexed drawings wherein:

- Fig. 1 and 2 are respective diagrams showing examples of conventional and hybrid grids of the prior art, where in Fig. 1 no renewable source is present, while in Fig. 2 the amount of renewable sources is limited to few percent;
- Fig. 3 is a diagram showing a hybrid grid according to present invention;
- Fig. 4 shows the expected variations of the power produced by large photovoltaic plant;
- Fig. 5 reports the Daily Aggregate Ramp Rate (DARR) of a wind generator for a period of 8 months. DARR represents the variability of wind during a day, and it is here calculated over a time step of 10 minutes;
- Fig. 6 is the estimate of a typical load profile in a Hibryd Grid, randomized with three different levels of variations (1-2-3 MW);
- Fig. 7 is a table reporting the features of the architecture of the control system for hybrid grids, according to the present invention;
- Fig. 8 shows a suggested division of the control functions of Hybrid Grid Smart Controller between the various pieces that compose it;
- Fig. 9, 10 and 11 are respective block diagrams showing the architecture of parts of the control system of fig. 7;
- Fig. 12, 13 and 14 are respective block diagrams showing corresponding parts of the control system of the preceding figures;
- Fig. 15 is further block diagrams showing the "ramp up limiter" function;
- Fig. 16 is a diagram showing an example of requested power output for inverters associated to photovoltaic generator of the system of the preceding figures;

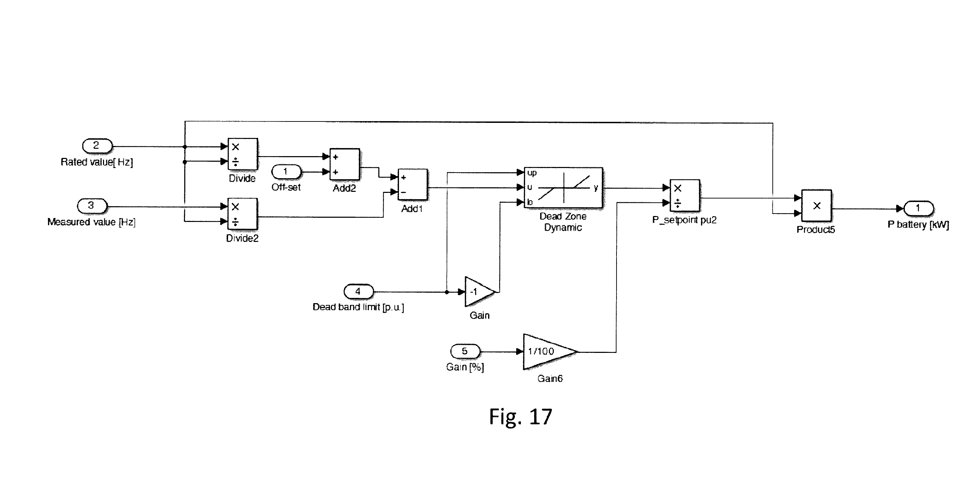

- Fig. 17 is a block diagram showing a control logic embedded in a Battery Energy Storage System of the system of the preceding figures;
- Fig. 18 is a block diagram showing a droop control for an inverter of the system of the preceding figures.

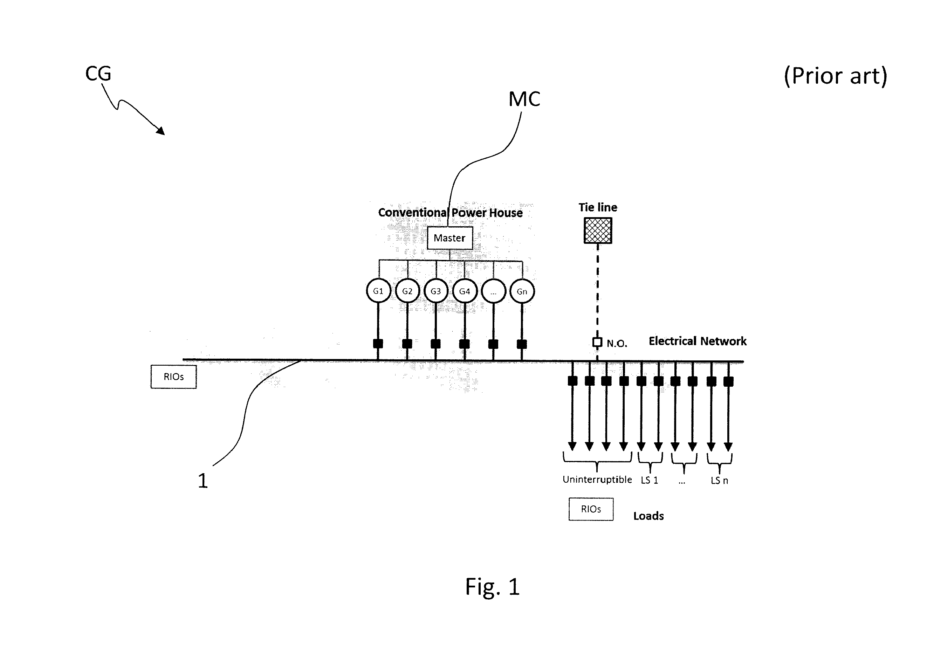

With reference to the drawings above, for better understanding the features of the present invention, a short overview should be given first about the grids of the prior art; figure 1 shows an example of such a conventional grid CG, which includes only conventional power generators G1-G6, e.g. apparatuses where internal combustion engines, gas or steam turbines drive an alternator.

Generators G1-Gn are connected to an electrical distribution network 1, as well as the loads LS1-LSn and uninterruptible loads are connected to the same network 1; in this connection it must be stated that in this figure and in the following ones, the electrical distribution inside the power system is schematically represented as a simple bus: in reality the configuration will be more flexible and complex, but it has no real effect on the power balance of the system and on the understanding of the invention.

The uninterruptible loads are necessary for preserving the plant safety, whereas the loads LS1-LSn are normal and can be shed in case of emergency; the grid CG is a micro/mini grid and may be applied to a plant such as an industrial manufacturing site, a mine or the like, and the power involved ranges from tenths kW to a few MW.

The conventional grid CG includes a master control system MC which carries out the following functions: the secondary frequency regulation, the load-sharing, the switching on/off the available generators to match the load demand, the control of a tie-line, i.e. a line connecting the micro grid CG to a bulk grid (only in the case of parallel running with it).

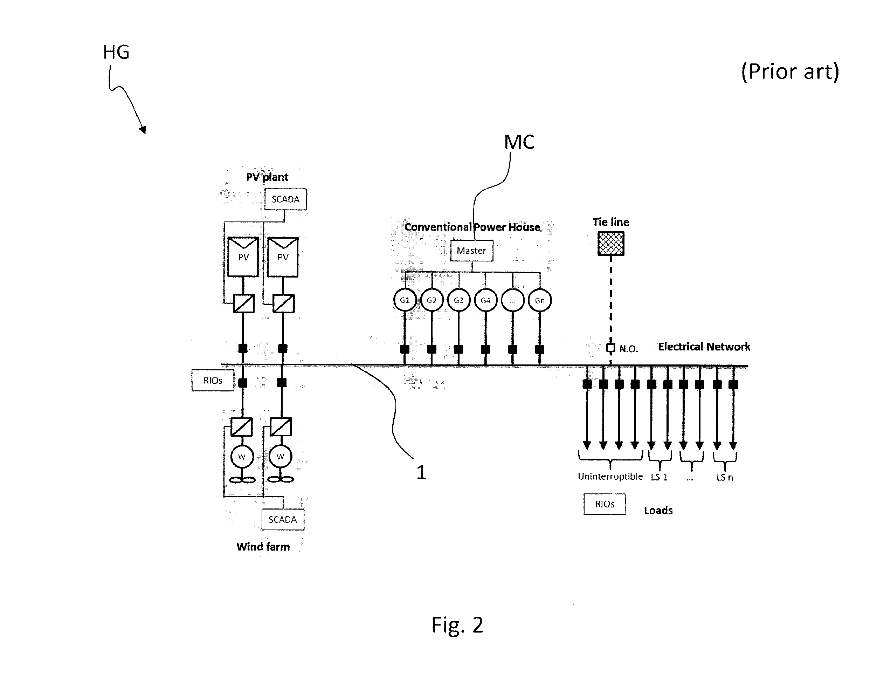

If renewable power sources are introduced into the conventional grid CG, then a hybrid grid HG of the type known in the art can be achieved; such a hybrid grid is shown in fig. 2 where, for sake of simplicity, the same reference signs have been used for the parts already shown in fig. 1.

As can be seen, in this case photovoltaic generators (shortly referred to with PV) and wind generators W1-Wn are connected to the electric network 1 and operate in parallel with the conventional generators G1-Gn; the stable operation of such a hybrid grid is jeopardized by the random variations of loads and renewable sources, that must be compensated by the conventional generators G1-Gn.

If loads are partially predictable, there is no practical possibility of predicting with the necessary level of accuracy the power generated by renewable sources: this fact makes it necessary to have a rotating reserve, that is a regulation margin for conventional generators, that matches the higher variation of renewable sources.

Such a requirement limits the rate of renewable energy (photovoltaic and wind in this case, but could be also hydroelectric or others) to a level that can be matched by the conventional generators; in the present times this limit is generally below 20 % of the power of conventional generators.

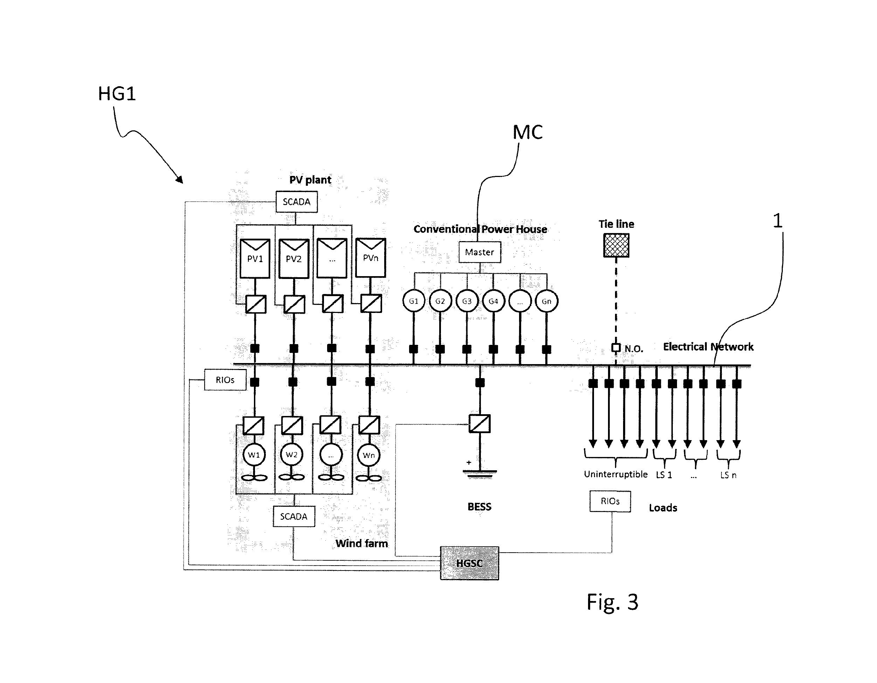

In the light of the prior art above, it can now be considered a hybrid grid HG1 according to the invention shown in figure 3, wherein for sake of simplicity the same reference signs have been used for the parts already discussed before.

In this case, the Hybrid Grid is further provided with a battery energy storage system (BESS) and a Hybrid Grid Smart Control HGSC; more specifically, the battery storage system BESS is able to compensate the rapid positive or negative variations of the power requested to the conventional power generators G1-Gn.

The smart control HGSC coordinates the operation of the renewable source generators PV and W1-W4 and the energy storage system BESS, so as to obtain an operating configuration that is robust even for the worst variations or events that can be predicted.

It is important to notice that the smart control HGSC is operatively connected to the batteries BESS, to the renewable source generators PV and W1-Wn as well as to the loads LS1-LSn with the uninterruptible ones, but it has no interaction with the conventional generators G1-Gn and their control system: this is important because it enables a smooth and safe transition from conventional grids to hybrid grids.

With this feature, in hybrid grids according to the present invention the penetration rate of renewable sources can reach values close to 100 %, thereby achieving great beneficial effects from an operating and environmental point of view.

As a consequence, the smart control HGSC can work both when the hybrid grid HG1 is isolated and when it is connected to a large-scale grid; the smart control HGSC and the grid HG1 can fit with applications ranging from 20-30 kW to 60-70 MW, in both concentrated and geographically distributed power systems.

As it will be better explained later, the smart control HGSC has hybrid architecture according to which some control functions are distributed in the peripheral controllers while other functions are centralized: such a feature provides for a higher availability and effectiveness, and is totally independent on the hardware structure on which the smart control HGSC is based. As a consequence, the control system HGSC can be implemented with any existing automation technology such as PLC, Soft-PLC, DCS, fieldbus based and other.

In accordance with a preferred embodiment, the smart control HGSC operates taking into account the daily aggregate ramp rate (DARR) of the solar irradiation for the photovoltaic generators PV1-PVn and of the wind speed for the wind generators W1-Wn; the DARR is a well known parameter in the art and in this case it indicates the variability of the solar irradiation and of the wind speed, during a day.

In this manner reference can be made to a parameter that is not influenced by variations of solar irradiation or speed wind, occurring in time intervals that are not relevant; this approach allows the smart control HGSC to compensate for the variations of solar irradiation and/or wind speed, with the use of a battery storage BESS that does not require a power storage which is too high. In other words, by making reference to daily aggregate values for the relevant parameters of the renewable power sources used in the hybrid grid (in this case irradiation and wind speed but it would be the same for water in case of hydraulic power or other), allows to control the hybrid grid with a relatively small power storage system in respect of the overall power of the grid.

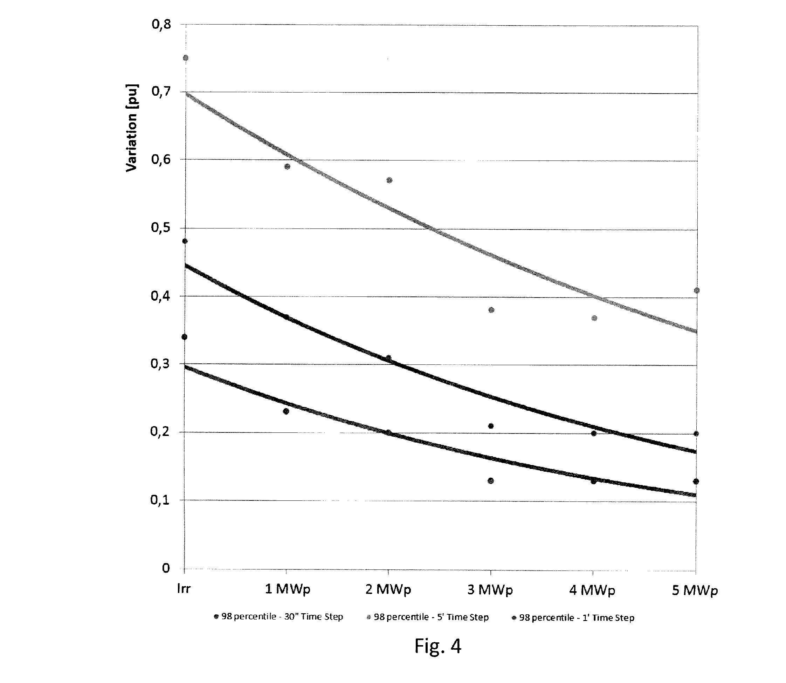

Figure 4 shows the pattern of the maximum expected variations of the output power of a photovoltaic plant of variable size (from 1 to 5 MW) in a time interval of 1, 5 and 30 seconds; this kind of data (that come from the measurements carried out in Renergetica's plants) serve as an input for the smart control HGSC, which processes the DARR that defines the variability of the irradiation in a day. In other terms DARR is the relative cumulative difference of irradiance measured on the array plane during a day, weighted on solar radiation at standard operating conditions stated in IEC 61853 standard series.

DARR represents the number of ramps from 0 to the average and vice versa, carried out during the day: the higher is the DARR, the higher is day variability; for instance, in a highly variable day the DARR of irradiation is greater than 30, whereas values less than 3 indicate clear or fully covered days.

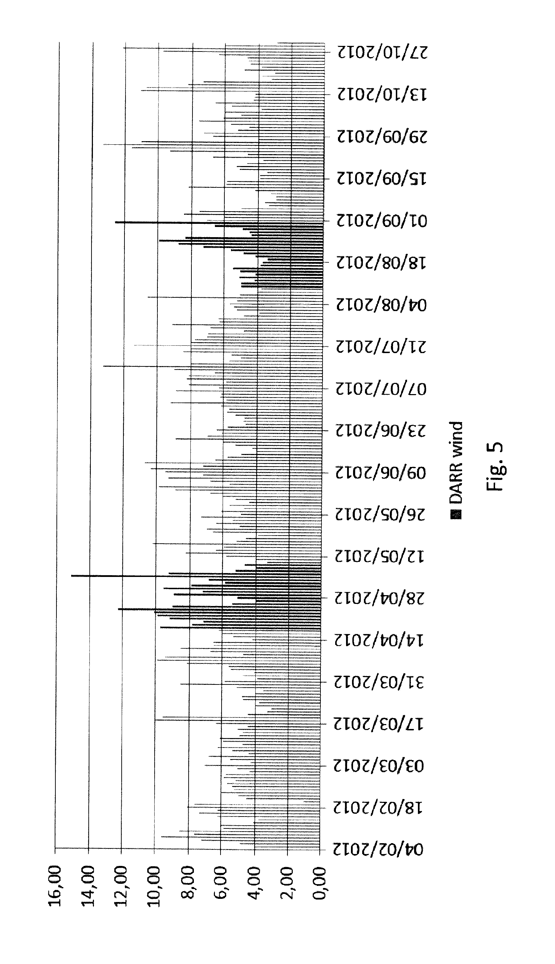

With a similar reasoning the DARR for the wind speed describes the wind variability in a day: DARR is the relative cumulative difference of wind measured during a day, weighted on the rated wind speed for a selected wind turbine.Figure 5 shows the pattern of the DARR of the wind speed along 8 months of a year, calculated from the measurements in a Renergetica's plant

As stated above, in order to compensate for the variations of the renewable sources, the present invention provides for the use of power storage BESS; BESS can be split today into two groups following their scope and technology: power storage batteries with a high specific power (kW/kg) on one side, and energy storage batteries with high energy density (kWh/kg) on the other side.

For instance, Pb-acid cells are good for energy storage, while Ni-Cd have good performances as regards power; Li-ion batteries are a good compromise.

The same principles for managing the variations of renewable sources can be applied, mutatis mutandis, to the load variations; indeed, it is well known that the load profile during the time of an electrical system depends, among other, on several variables: type of application (i.e. industrial, residential, commercial or other), environmental conditions (i.e. temperatures, geographical location, etc.), devices installed (large or small electric motors, converters, utilities, etc.).

Preferably, the characterization of the load is based on four kinds of variations: seasonal, daily, mid-term (minutes), short-term (seconds); the minimum data set requested to define the load profile is given by the seasonal worst cases (evaluated through a statistical analysis of available measurements), the daily load profile evaluated hour per hour, the maximum variability in the mid-term expressed as a percentage range of variations, and a list of the loads or groups of loads that can be switched on/off singularly.

According to the invention an accurate characterization of the load profile is important for sizing the master control MGMC and evaluating its effectiveness.

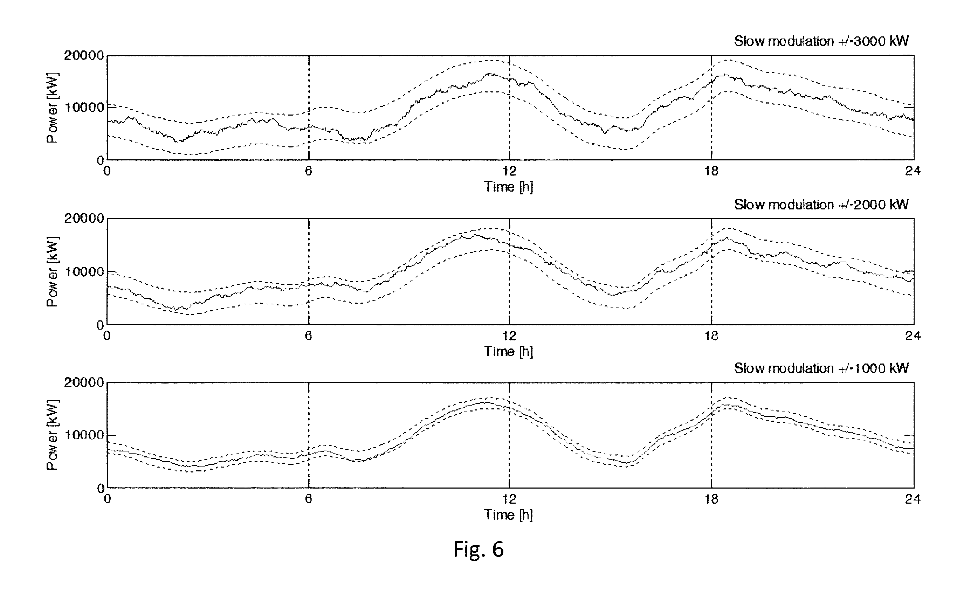

Figure 6 shows an example of patterns of the load, with an interpolated profile randomized using mid-term modulations within three different limits of variability.

The smart control HGSC must fulfil the requirements stated by the standards (for instance EN 50160) for off-grid and grid-connected power systems. For example, in isolated systems the power frequency variations must be normally in a range of 50 Hz $\pm$ 2% during 95 % of a week, 50 Hz $\pm$ 15 % during 100 % of the time; the supply voltage must fall in a range between + 10% and -15% of the nominal value.

Hybrid grids must however fulfil also other requirements, such as the reduction of fuel consumption, the reduction of the wear of the conventional generators, an increase in the operative life of the conventional generators. The achievement of these targets can be measured by means of proper indicators (Key Performance Indicator - KPI), calculated for monitoring different aspects; such indicators can relate to the frequency maximum and minimum value (KPI_PQ_MM), the frequency standard deviation

(KPI_PQ_SD); similar indicators can be provided in respect of the energy efficiency and generators stress indicators.

The operating principles of the control method of a hybrid grid according to the invention can be explained as follows.

The smart control HGSC allows a deep penetration rate of renewable sources with respect to conventional hybrid grids like that shown in fig. 2, with two important advantages: an equal or better power quality of the hybrid grid compared to a conventional one; no interface or data exchange with the existing master controller MC is required.

The stability of the electrical networks fed by conventional sources is given by the full controllability of the power output of this kind of generators; the dynamic behaviour of the grid is described by the well known electromechanical equation:

$$\Sigma P_{conv} - \Sigma\, P_{load} = J \cdot 2\Pi\, df/dt$$

Where:

$\Sigma P_{conv}$ is the total power produced by conventional generators,
$\Sigma\, P_{load}$ is the total load power demand,
J is the inertia of all rotating generators and motors,
f is the frequency of the grid.

Renewable sources introduce a further variable in the system so that the preceding equation is modified as follows:

$$\Sigma P_{conv} + \Sigma P_{renew} - \Sigma\, P_{load} = J \cdot 2\Pi\, df/dt$$

Where $\Sigma P_{renew}$ is the total power generated by the renewable sources.

The system becomes critical when the conventional generators are not able to supply the missing power, due to a sudden variation of the power from the renewable sources (e.g. because of a cloud for a PV plant or a fall in the wind speed for wind turbines).

This situation is overcome by the battery storage BESS, which allows to smoothen the load demand for the conventional generators G1-Gn; at the same time the battery storage BESS maintains the load that must be produced by the conventional generators within acceptable limits: all of these functions are controlled by the smart control HGSC.

For this reason the power that can be controlled by the smart control HGSC can be defined as:

$$P_{HGSC} = \Sigma P_{load} - (\Sigma P_{renew} + \Sigma P_{BESS})$$

Where $\Sigma P_{BESS}$ is the power produced by the storage system BESS, which is positive when supplied to the grid; in view of this, the electro-mechanical equation above becomes:

$$\Sigma P_{conv} - P_{HGSC} = J \cdot 2\Pi \, df/dt$$

With this method the renewable sources simply reduce the load to be supplied by conventional sources, while the storage system guarantees that the transition and load variations are sufficiently smooth.

For this reason there is no interaction between the smart control HGSC and the master control MC of the conventional generator.

The smart controller HGSC ensures that the conventional generators with their speed controllers are always in conditions to keep the grid stable; the function of "load shedding" that will be better discussed later, offers protection against sudden loss of generation capacity, e.g. for a failure of a generator.

Similarly, the function "Generator shedding" protects the system against sudden loss of important loads; the grid can be considered safe if the conventional generators are able to compensate the largest expected variations of the renewable sources; the smart control HGSC reaches this target by taking into account the following rules.

The first one is that there must always be at least one conventional generator running above its minimum power; the second is that a number of conventional generators adequate for balancing the worst predictable power $P_{HGSC}$ controlled by the smart control HGSC, must always be running; then a third rule is that the variations of power $P_{HGSC}$ must be as smooth as possible.

The first two conditions are satisfied by setting a threshold of "Minimum Base Load" (MBL) for the power $P_{HGSC}$ controlled by the smart control HGSC: this threshold is the minimum power that the conventional sources must generate to have the requested minimum number of generators running; this situation corresponds to the relation $P_{HGSC} \geq P_{MBL}$.

When the renewable sources have a capacity of power production greater than the load demand, such a relation becomes an equation: $P_{HGSC} = P_{MBL}$; in this condition the conventional generators see a flat generation request and run at a constant load.

The minimum base load MBL maximizes the production from renewable sources with a strict restrain related to the stability of the hybrid grid HG1; considering the involved dynamic (turning on/off a conventional generator may require some minutes) and the amount of data requested for calculating the set-points, the minimum base load function MBL is processed by the smart control HGSC.

The evaluated set-points are sent to the SCADA systems (i.e. Supervisory Control and Data Acquisition) of the renewable power plants that split the total demand between the available generators.

The third condition is satisfied by combining the actions of the renewable source inverters together with the power storage system BESS, as will be better set forth in the following.

The load demand and the production of the renewable sources are subject to significant and unpredictable variations that are limited by the smart control HGSC, in accordance with two coordinated strategies.

The first one is to limit the power output of the generator that is varying (e.g. for example during the transition from cloudy to clear sky for a photovoltaic generator PV); each inverter of photovoltaic and wind generators implements a rate of change limiter for avoiding too rapid positive variations.

The second strategy is to implement a primary proportional controller in every controlled generator, for modifying the power output as a function of the frequency deviation caused by the power unbalance originated by the load or generation variations; frequency variations occur when the first strategy cannot be applied.

Both the renewable source and the battery storage BESS are made sensitive to the frequency value; according to a preferred embodiment, they are provided with proportional controllers (droop controllers) that modify instantaneously the active power output as a function of the frequency error (droop control).

If necessary, the droop controller overtakes the possible limitations of the output power and its rate-of-change; in normal conditions, the renewable sources provide the higher amount of power that is possible in the current environment conditions (referred to as Maximum Power Point Tracking - MPTT), so that they can only reduce their production in case of over-frequency: the integration of the battery storage system BESS in the architecture of the smart controller HGSC, allows to react properly also during under-frequency transients.

As can be understood, the combined effects described above of the steps of the control method according to the invention stabilize and smoothen the $P_{HGSC}$ value; among the features which provide for achieving the effects above, there are the renewable source inverters equipped with an autonomous droop control sensitive to the grid frequency and a positive rate-of-change limiter.

Another feature is the battery storage system BESS equipped with an autonomous droop control sensitive to the grid frequency.

These functions are embedded in each inverter, since they operate on local variables (derivative of the active power or frequency deviation) without any centralized control: such a solution reduces the time response, simplifies the architecture and increases the system availability.

The reactive power management is related to the voltage of the system and it has very marginal effects on the system efficiency; the exciters of conventional generators react to voltage variations very quickly and the inverters of renewable generators can produce reactive power almost without any relation with the availability of renewable sources.

For these reasons the reactive power balance and the related voltage stability are of no concern in all working conditions; the smart control HGSC manages the reactive power production sending to each SCADA system of the renewable sources a set-point ($Q_{SP}$) evaluated as a pre-defined percentage ($k_{VAR}$) of the reactive power requested by the loads ($Q_{load}$), so that it can be stated that $Q_{SP} = Q_{load} \times k_{VAR}$.

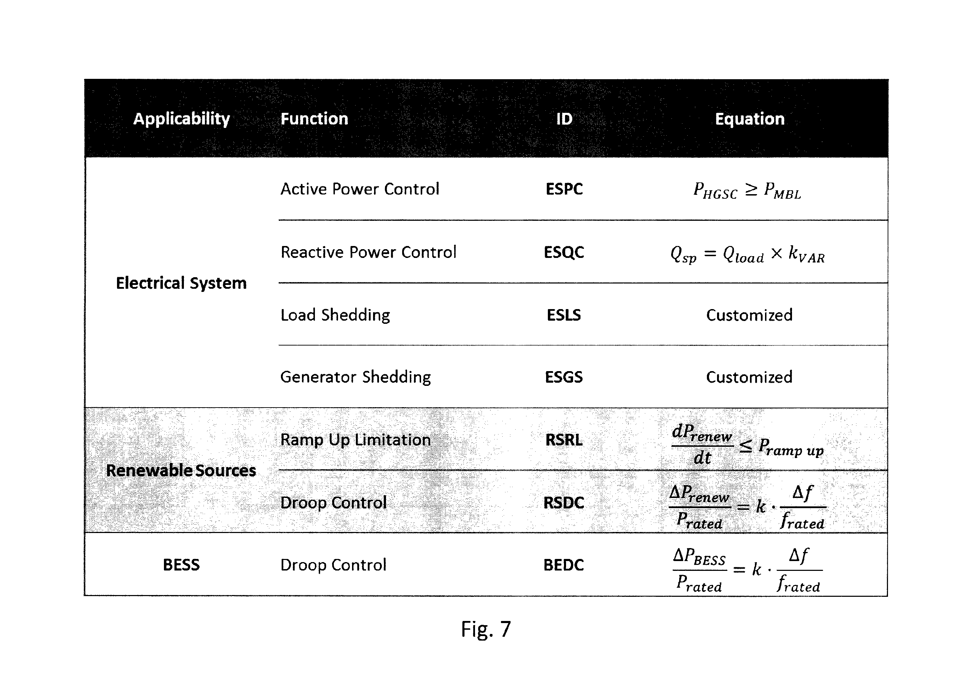

The functions of the smart control HGSC are set forth in the table reported in figure 7; it is convenient to split these functions into separate tasks, each task running on the most appropriate piece of hardware.

For instance, some tasks are carried out by the smart control HGSC central unit (centralized approach), other are embedded in the controllers of field devices such as the inverters or others (distributed approach).

Under a general point of view it can be stated that in the method of the invention, each control function can be centralized in the smart control HGSC or located in peripheral units associated with different parts of the grid, or be a hybrid of these two solutions.

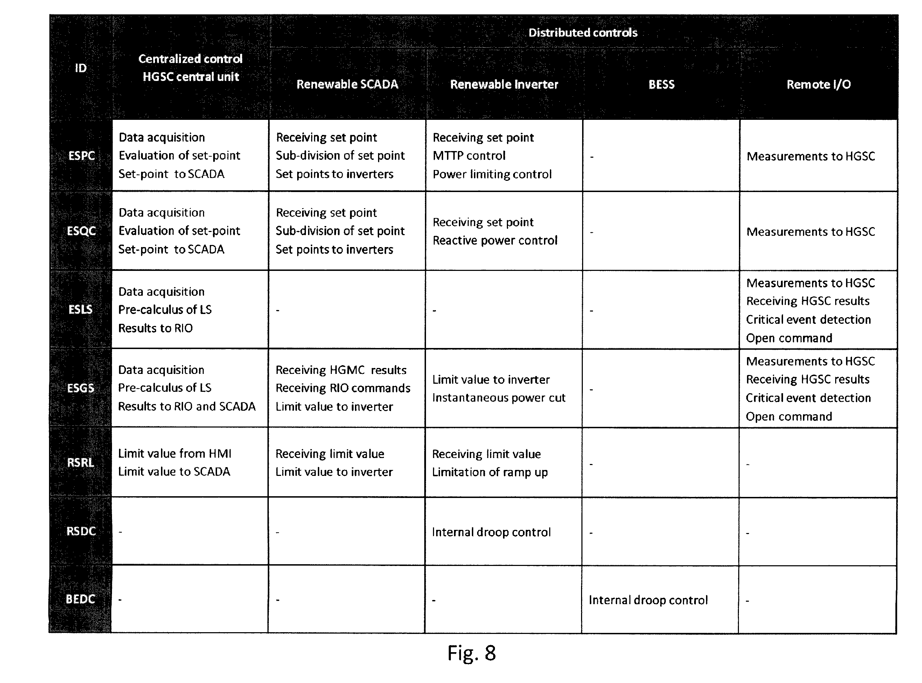

The method is therefore rather flexible and can be adapted to different situations on the field; this feature can be better appreciated from the table of figure 8 which shows the architecture of the control functions of the smart control HGSC in different embodiments of the inventions.

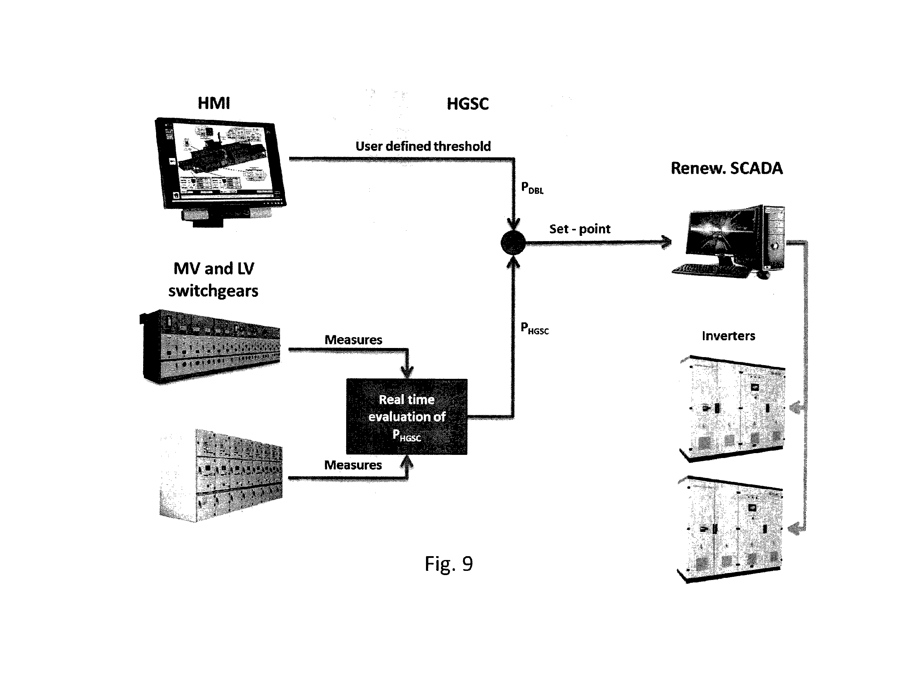

In so far the centralized control function is concerned from figures 9, 10 and 11 it can be understood that in this case the smart control HGSC collects as inputs all the data available from the users, i.e. the manager of the grid, through an appropriate interface HMI, and the electrical switchgears such as circuit breakers status, measurements, alarms, sensors, etc..

The set-points and command necessary to perform the control functions (ESPC, ESQP, ESLS, ESGS) are calculated by the central processor and sent to the appropriate field devices.

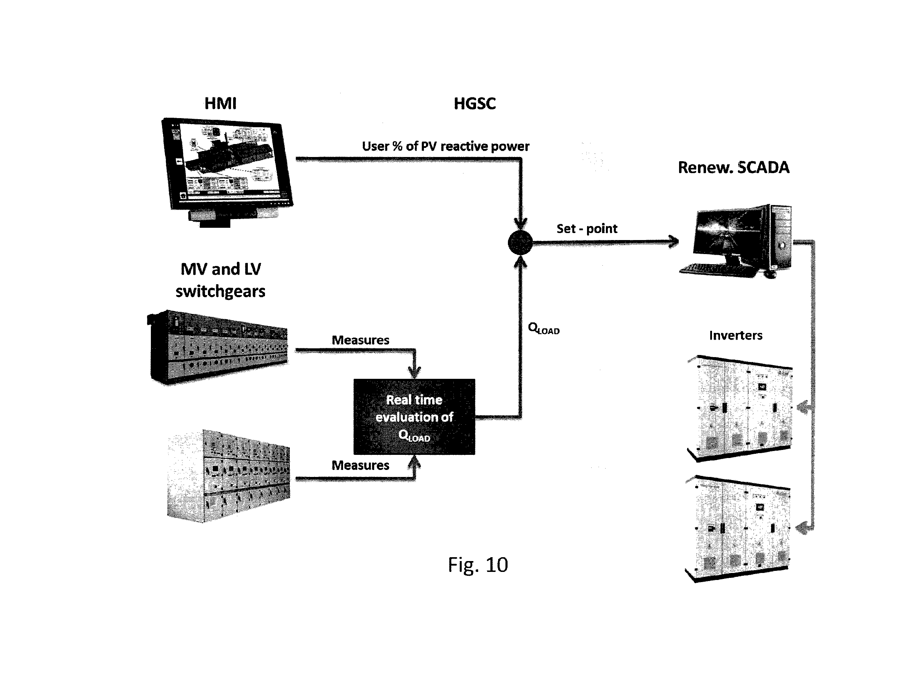

The ESPC and ESQC set-points are exchanged with the renewable sources SCADA systems which evaluate the set-point for each single generator of the hybrid grid HG1 (see figures 9 and 10).

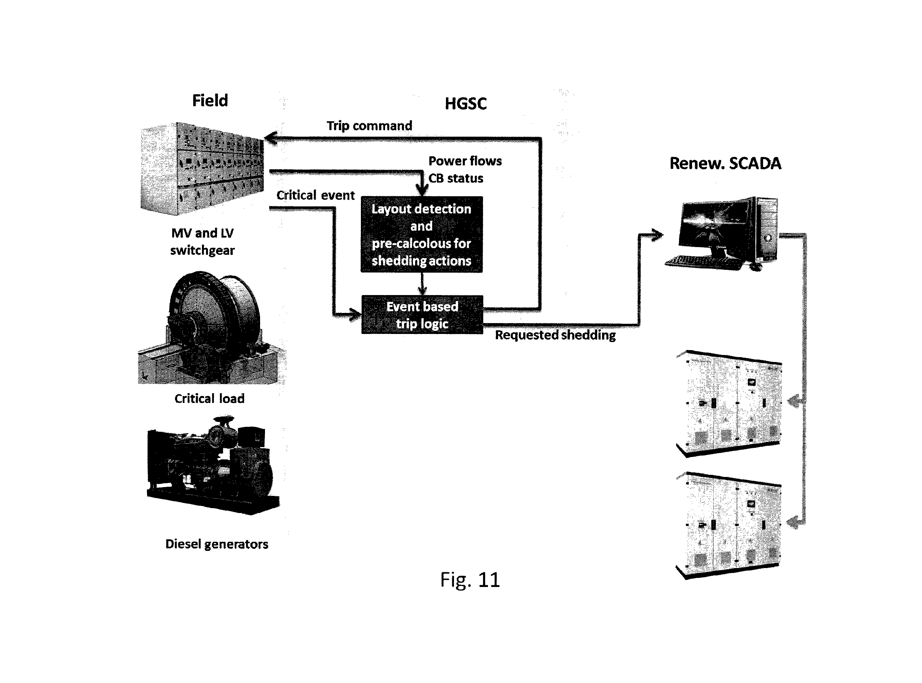

The ESGS and ELS shedding command are directly sent to the related circuit breakers (see figure 11); the RSDC and BEDC are totally embedded in the inverters firmware while for RSRL the communication chain is involved only to transmit the threshold from the HMI to the inverters.

In this connection it just matters to be added that the smart control HGSC can run in any suitable digital controller (such as PLC, soft-PLC, DCS), depending on the dimensions and complexity of the hybrid grid and of its operation; for sake of simplicity in this description, such controller will be generally referred to as central unit of the smart control HGSC.

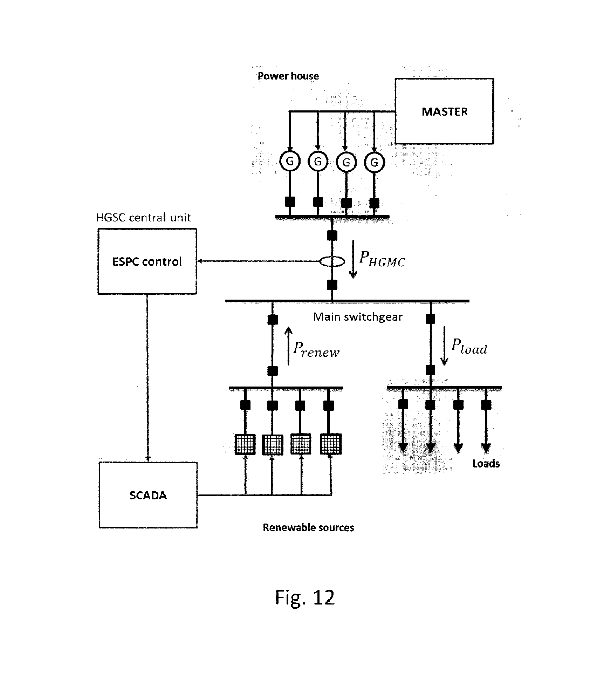

Among the functions carried out by the smart control HGSC there is the control referred to as ESPC of the active power of the grid, schematically explained in the block diagram of figure 12; the ESPC control operates in closed control loop; the reference variable is the power produced by the conventional generation $P_{HGSC}$, whereas the power produced by the renewable sources $P_{renew}$ is the controlled variable.

The control function is carried out by the smart control HGSC central unit, which reads the measurements of power flows from the main switchgear; calculates the maximum power $P_{renew}$ that the renewable sources can produce to make the inequality $P_{HGSC} \geq P_{renew}$ true; sends the set-point $P_{renew}$ to the SCADA of the renewable sources that split this request between the available generators.

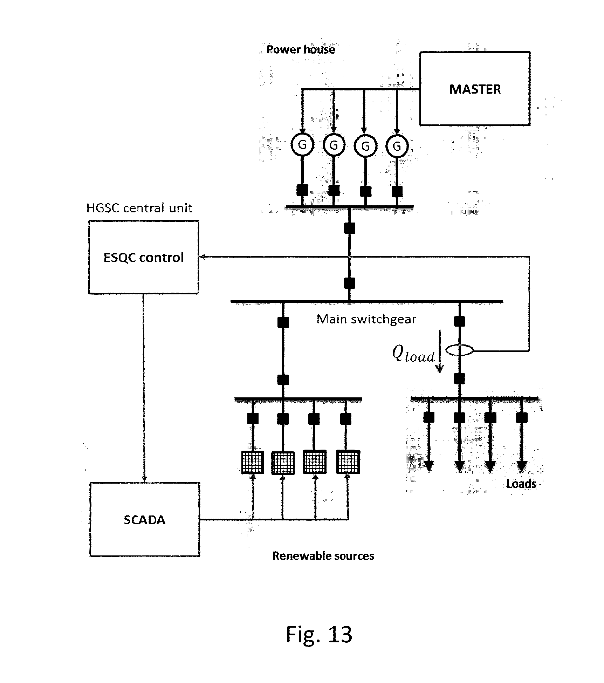

The smart control HGSC also carries out the control ESQC of the reactive power of the hybrid grid HG1; such a control is shown in the block diagram of figure 13 and operates in closed control loop.

The reference variable is the reactive power consumed by the loads ($Q_{load}$) and the reactive power produced by the renewable sources ($Q_{renew}$) is the controlled variable.

The control loop runs on the smart control HGSC central unit, which reads the reactive power flows to the loads ($Q_{load}$) from the main switchgears; then it considers the input defined by the user of percentage of renewable reactive power ($k_{VAR}$); it calculates the reactive power that the renewable sources should produce (Qrenew) with the equation $Q_{renew} = Q_{load} \times k_{VAR;}$ finally it sends the set-point $Q_{renew}$ to the SCADA system of the renewable source.

Some critical events (e.g. the loss of a generator or a load) in an insulated system may create a heavy power unbalance that jeopardizes the system integrity due to under or over frequency; the unique countermeasure to this kind of events is the instantaneous tripping out of loads (in case of excess of load) or of generators (in case of generation over capacity).

These situations can be faced with the shedding of loads or of generators.

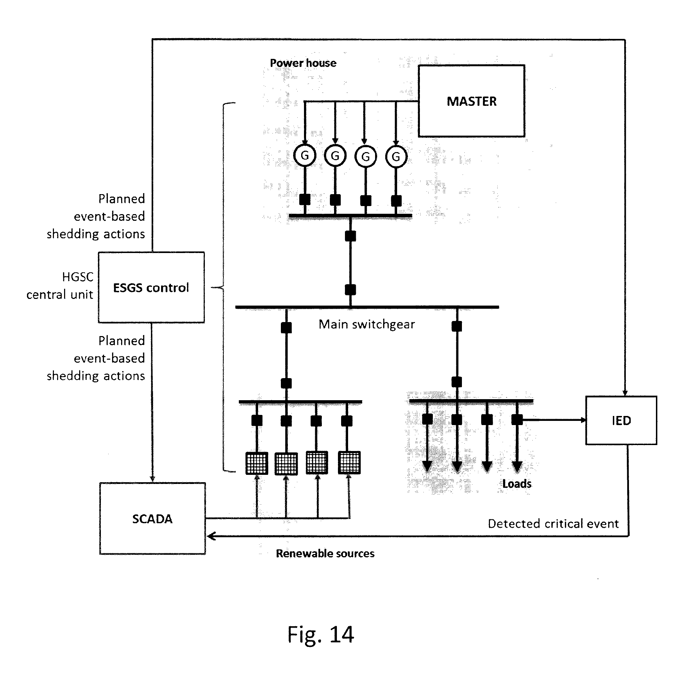

In a centralized solution of the control system according to the invention (see block diagram of figure 14), the shedding functions are carried out by the mater controller HGSC that performs the following actions: monitoring the current network conditions; identifying the "critical" events; evaluating the consequence of each event and identifying the proper counteractions; downloading the table (event→ actions) to the involved field devices (e.g. intelligent remote I/O, inverters, switchgears, etc.).

These operations are cyclically iterated by the smart control HGSC with a slow cycle time of some seconds or tenths of seconds; at every cycle, the smart controller updates the logic in the field devices: this approach allows implementing very fast and effective event-based operating procedures.

A first procedure corresponds to the generator shedding: when the breaker of large load is opened, the involved field device sends the signal to the renewable inverters to reduce the power output of the value pre-determined by the centralized logics contained in the smart control HGSC.

A second procedure corresponds to the load shedding: when the circuit breaker of renewable generation trips the involved field device sends the opening command to the Circuit Breakers of interruptible loads preidentified by the centralized logics of the smart control HGSC, thereby disconnecting the amount of power requested to balance the system.

The load shedding and the generator shedding functions are customized for each network.

In the case of distributed control, i.e. not centralized as the one described above, the active power control (shortly referred to as ESPC in fig. 8) is carried out by the SCADA system that controls the renewable sources.

For this purpose this SCADA system receives the value of maximum producible power from the smart control HGSC and shares this limit together with the supervised generators in operations; power sharing is proportional to the rated power of each generator unless a bias is set for specific reasons.

In so far the reactive power control (ESQC) is concerned, the SCADA system that controls the renewable sources receives the set-point of requested reactive power from the smart control HGSC and shares this limit together with the supervised inverters in operation; the reactive power sharing is proportional to the rated power of each generator unless a bias is set for specific reasons.

For what it concerns the generators ramp-up limitation, i.e. the limitation of the variation through time of the power provided by the generators, this function (referred to as RSRL in fig. 8) is fully distributed; more specifically the SCADA receives as an input the RSRL, i.e. the ramp-up limit of each generator, from the smart control HGSC and communicates it to the controlled generators.

In the distributed type control of the hybrid grid HG1, the renewable sources are not directly involved in the load shedding (ESLS in fig. 8) whereas they operate the generator shedding (ESGS).

For this purpose the SCADA system of renewable sources is programmed to actuate the generator shedding logic, whose basic criteria are as follows.

The first step is to receive cyclically from the smart control HGSC the predefined table "event→ actions"; afterward the second step is to monitor, with a rapid reading cycle, the Remote Input Outputs devices that detect the critical events.

The last step is that when a critical event is acknowledged, the SCADA sends to the supervised generators the predefined commands related with the detected events.

Another important feature which should be taken into account is that in the distributed control system according to the present invention, the renewable sources generators, i.e. photovoltaic PV and wind W1-W3 generators are inverters.

As a consequence in normal operation they work in a "Maximum Power Point Tracking" mode (MPPT) to maximize the produced active power; in a hybrid grid as that of figure 3, the inverters should support three additional working modes under the control of the smart control HGSC.

The first working mode is the maximum power output limited by the external limit value calculated by the ESPC function referred to above; the second working mode is a power rate-of-change limited by the external value calculated by the RSRL function referred to above; the third working mode is the droop-like control (RSDC in figure 8).

The MPPT mode is the normal working condition of the inverter, and it is reduced only when the energy production from renewable sources makes the power production from conventional sources lower than the minimum base load MBL referred to before.

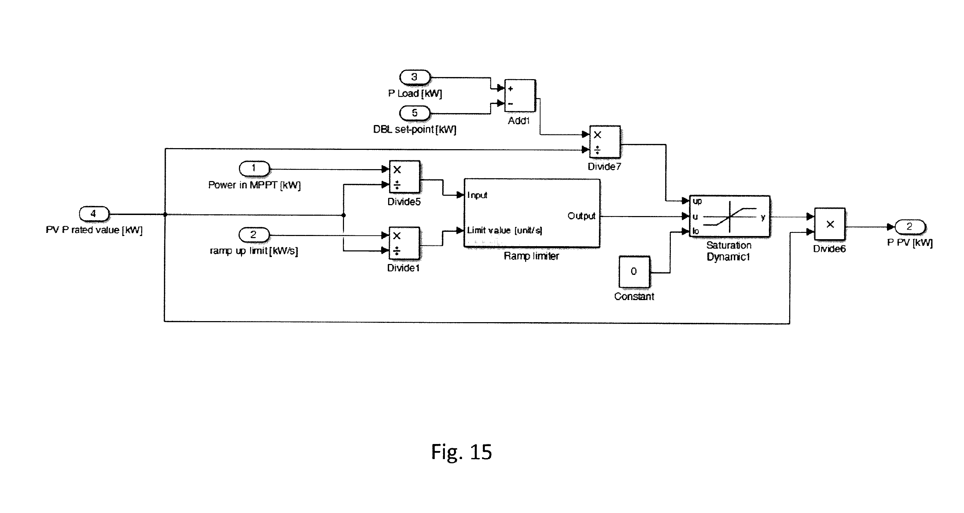

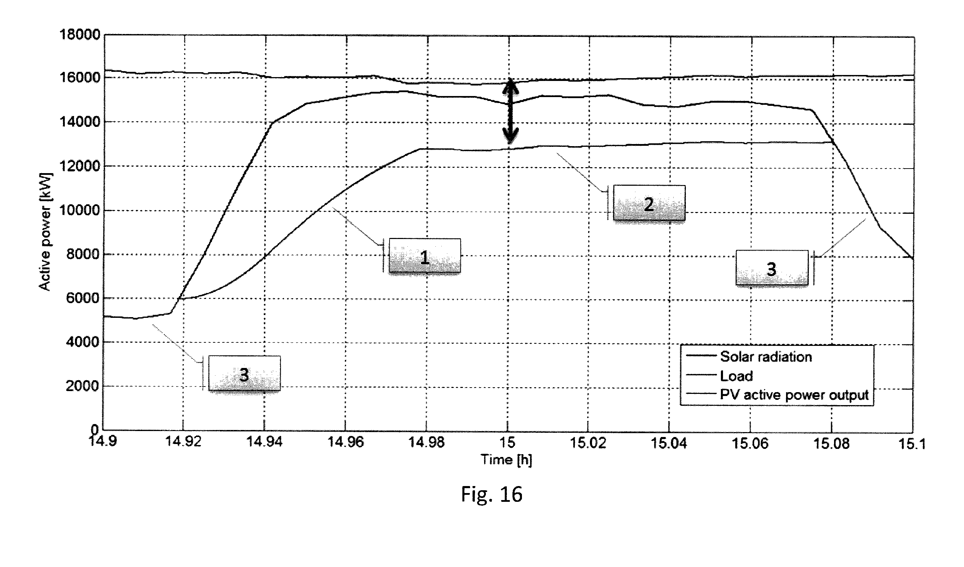

As a consequence the inverters, i.e. the renewable generators PV and W1-Wn, implement a logic that modifies both the output power and its maximum rate-of-change according to the set-points received by the ESPC and RSRL functions; these two logics are represented in the diagram of figure 15, while an example of typical behaviour of a renewable generator/inverter equipped with the above control logics (without significant frequency perturbations) is shown in figure 16.

As can be seen from the latter, the active power output is limited in the increasing rate during a first ramp-up (indicated with reference numeral 1 in fig. 16), typically due to the sun after the clouds.

The active power is limited in absolute value when the power produced by conventional sources reaches the minimum acceptable level MBL (reference numeral 2); in all the other time the renewable source generators/inverters operates in the MPPT mode.

These control logics of the renewable generators work in parallel with the droop control described previously; the droop response is not limited either in value or in rate-of-change, i.e. all the power is always available for droop response.

For the reactive power control ESQC, the inverter receives the set-point of reactive power from the SCADA, as already explained before; when no reactive power set-point is received, the inverters work in voltage control mode.

As regards the generator shedding, the ESGS function considered above provides for sending a command for zeroing the output power of each inverter when an excess generation capacity is detected; this command overtakes all the other control inverter. According to the control method of the invention of the hybrid grid HG1, the main task of the battery storage BESS is smoothing the power variations caused both by the renewable sources and by the loads.

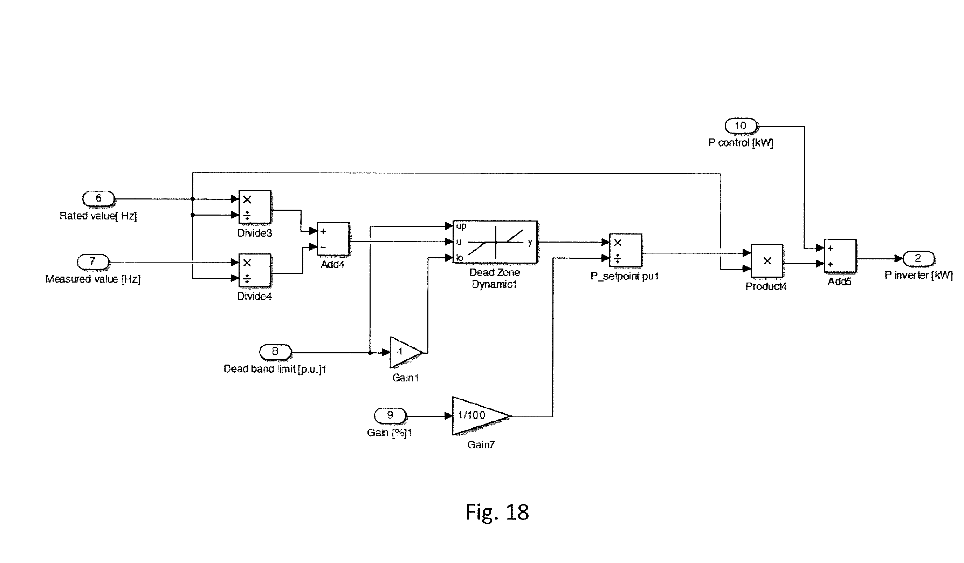

In the distributed version of the control method of the invention, the battery storage BESS embeds the droop controller as shown in figure 18; the active power output of the battery storage BESS is inversely proportional to the frequency error, with the due dead-band and rate-of-charge limiter.

When the system frequency is within a given band around its rated value, the battery system BESS output is zero: it is always possible to force the battery system BESS into the recharge mode or to impose a fixed discharge rate.

From what has been stated heretofore, it can be understood how the control system of the hybrid grid HG1 solves the technical problem underlying the present invention.

At first it should be considered that by making the smart control HGSC to control the renewable source generators (photovoltaic PV, wind generators W1-Wn, or others) and not the conventional generators (internal combustion engines, gas turbines etc.), allows to reach much higher penetration rates (up to and above 80 %) of renewable sources with respect to the prior art hybrid grids even in existing plants with conventional generators.

Indeed in this manner the smart controller HGSC may balance the power generated by the renewable sources and that of the conventional sources, so as to obtain in real time the optimum power mix in function of the operating conditions, such as sun irradiation, wind speed, loads supplied, and so on. Therefore, when there are good solar and wind conditions, the penetration rate of renewable sources power generation may rise up to 80 % and more, because there is no need or running a high number of conventional generators.

It should be taken into account that the most common insulated grids of the prior art are supplied by conventional generators controlled by a master controller that manages the available conventional generators (i.e. with combustion engine) to regulate voltage and frequency close to their rated values. At the same time, normally the master controller MC maintains the load of the generators between 30 % and 80 %: these targets are obtained modifying the set-point of active power [reactive power] to the generator when a frequency [voltage] error is detected.

The master controller MC modifies also the number of generators that have to run in order to guarantee an acceptable loading factor: the actions of the master controller MC, together with the full controllability of conventional generators, ensure a high level of stability of the system, thereby limiting the risk of black-out.

The same control logic cannot be applied to the renewable source generators PV1-PVn, and W1-Wn, because their output cannot be controlled and depends on the current environment conditions.

Therefore, according to the teaching of the present invention, a smart control HGSC for the hybrid grid HG1 is provided, different from that for the conventional generators G1-Gn.

This feature allows a deep penetration rate of the renewable sources, with two important benefits: equal or better quality of the hybrid grid HG1 compared to the grids of the prior art (see Fig. 2); no interface or data exchange with existing master controller MC, is required: this fact renders the present invention applicable to already existing grids, without the need for modifying them or for complex and unreliable data exchange networks. In this connection it must be observed the importance of the battery energy storage system BESS, which allows to compensate for sudden changes in aforesaid conditions: for instance, in case of a sudden increase of power demand or of lack in conventional or renewable generation, the battery system operates by providing the necessary quantity of energy in a short lapse of time, so as to avoid high variations in the output frequency and/or voltage of the electric power produced by the grid.

As a consequence the battery system BESS operates only for compensating the unbalances arising during a short period of time sufficient to reinstate the correct operating conditions, not for replacing the faults of power productions of the grid as a whole.

This allows to have a battery system which is not too large since it must operate only during short periods of time, i.e. those necessary to make the conventional generators G1-Gn compensating for sudden high load demands or faults of conventional sources generators, due to changes in environmental conditions (e.g. cloudy weather, lack of wind etc.).

The fact of having a battery system BESS of small dimensions with respect to the overall power involved, provides for applying the control method of the invention to hybrid grids of several tenth of MW and also up to 100 MW: this result is not possible with the control systems of the prior art.

In this connection it must be emphasized that the dimensions of the hybrid grid have to be assessed in function of the load, so that the control method of the invention can be applied in principle to hybrid grids of any dimensions; however, by using the modern technologies it has been seen that the preferred range of application of the control method of the invention is between 100 kW and 50 MW.

The battery system BESS also prevents the mechanical stresses induced into the conventional generators, when an abrupt increase or decrease of the load demand arises.

Indeed the energy supplied by the battery smoothens the stepwise power variation which occurs in these circumstances, so that the mechanical stress increases progressively without damaging the motor of the generator.

On this subject it must be observed that the performances of the battery system BESS are greatly enhanced by the droop control, which allows having all the power of the battery available: indeed the droop response is not limited either in value or in rate-of-change for droop response.

Moreover, with the hybrid grid control method according to the invention it is possible to have the conventional generators G1-Gn working in correct conditions (i.e. above their minimum technical limit); indeed the number and the operating parameters (i.e. rotation speed, torque etc.) of the driving motors associated to the conventional generators G1-Gn, are always controlled autonomously by their controller which is not the smart control HGSC of the hybrid grid HG1: this feature makes possible for the conventional generators to work in the best possible conditions.

From the foregoing it is possible to set forth a summary of the effects achieved by the invention, as follows.

Smart Control HGSC is able to perform the control of active and reactive power and to manage the spinning reserve in all electrical systems with inner generation given both renewable and conventional resources. The functions of HGMC give the maximum benefits in islanded conditions; this islanding condition could be intentional, due to faults, due to a weak main grid or determined by a physical separation of the electrical system.

Smart Control HGSC allows increasing significantly the penetration of renewable sources in all the electrical systems where the master of frequency and voltage is given by the conventional generation. This result is reached maintaining the performances of safety and reliability of an electrical system fully supplied by conventional sources.

Smart Control HGSC is fully scalable and customizable (the minimum configuration is given by one conventional generator and one renewable source of any kind). Smart Control HGSC has no limit in size, from few kW up to many MW

Smart Control HGSC centralized algorithms set the values of both the active and the reactive power for renewable sources

When the Hybrid Grid is isolated, coordinated action of the inverter control and the BESS control for smoothing the power variations originated both by the loads and the sources and for reducing the operations of turning on/off requested to the conventional generators. When the Hybrid Grid is in parallel with the main grid, the above action leads to a steady profile of power injected or absorbed by the HG even with large variations of renewable sources or loads

Furthermore, the Smart Control HGSC has no physical interaction with the master control MC of conventional power generators G1-Gn: this provides for some important technical effects.

First of all, the Smart Control HGSC can be easily implemented on existing plants because there is no interaction with the existing master control MC; this feature also leads to operational separation between conventional and renewable sources (separate subjects).

Furthermore, this feature allows also to switch off the renewable generators with a standard operation of the conventional power generators (e.g. for safety reasons).

In this connection it must also be considered that Smart Control HGSC makes the power required to conventional generators always higher than the minimum threshold; this fact guarantees some important effects: the generators always run above their minimum power and their spinning reserve is adequate for satisfying the expected maximum variations of load/generation.

All of the technical above effects are provided by the Smart Control (HGSC) whose functions are split between central unit and field devices, like inverters, the battery storage BESS, and remote I/O; this bring the advantage that field devices are independent for controlling the real time behavior of the system, while centralized control optimizes energy profiles.

The battery storage BESS is optimized to compensate the power variations of renewable sources with a confidence of up to 98% and with and a minimum sizing of the storage capacity

The smart control HGMC can operate even in degraded conditions (e.g. without the battery system BESS), always with the higher safety for the conventional plant. In degraded conditions, it is possible to increase the base load for conventional generators to achieve a capacity of regulation sufficient for compensating the expected variations of the renewable sources

All of these features fall within the scope of the following claims.

## Claims

1. Method for controlling a hybrid grid (HG) that comprises an electrical distribution network (1), conventional source generator means (G1-Gn) and renewable source generator means (PV1-PVn, W1-Wn) connected to the electrical distribution network (1) for supplying electrical power to loads (LS1-LSn) connected to the electrical distribution network (1), **characterized in that** it comprises the steps of:

i) establishing an amount of power to be generated by the renewable source generator means (PV1-PVn, W1-Wn), in function of the environmental conditions influencing the renewable source generator means (PV1-PVn, W1-Wn);

ii) balancing the electric power supplied to the electrical network (1) by the renewable source generator means (PV1-PVn, W1-Wn) and by the conventional generator means (G1-Gn), so as to comply with the load (LS1-LSn) power demand.

2. Method according to claim 1, wherein the amount of power established in step i) is substantially the maximum that can be generated by the renewable source generator means (PV1-PVn, W1-Wn), for the environmental conditions rated at a set time interval.

3. Method according to claims 1 or 2, wherein the hybrid grid (HG) includes an energy storage system (BESS) and wherein the balancing step includes the supply of electrical power by the storage system (BESS), for a determined time interval.

4. Method according to any of claims 1 to 3, wherein the balancing step includes the disconnection and/or operation of at least part of the renewable source generator means (PV1-PVn, W1-Wn) or of the conventional source generator means (G1-Gn).

5. Method according to claim 4, wherein the balancing step further comprises the following sub-steps carried out cyclically:

to monitor the current network conditions;
to identify critical events such as the loss of at least part of the generator means (PV1-PVn, W1-Wn) or of the load (LS1-LSn);
to evaluate the consequence of each event and identify a corresponding counter action;
carry out the disconnection and/or operation of at least part of the renewable source generator means (G1-Gn) or of the conventional source generator means (G1-Gn), as the counter action.

6. Method according to any of the preceding claims, wherein the conventional generator means (G1-Gn) are controlled autonomously with respect to the renewable source generator means (PV1-PVn, W1-Wn).

7. Method according to any of the preceding claims, wherein the renewable source generator means comprise photovoltaic plants (PV1-PVn) and/or wind generators (W1-Wn), and wherein the conventional source generation means comprise internal combustion engine and/or gas turbine.

8. Apparatus for carrying out the method of the preceding claims, comprising an electrical distribution network (1), conventional source generator means (G1-Gn) and renewable source generator means (PV1-PVn, W1-Wn) connected to the electrical network (1) for supplying electrical power to a load (LS1-LSn) connected to the electrical network (1), **characterized in that** it comprises a Hybrid Grid Smart Controller (HGSC) which is operatively connected to the renewable source generator means (PV1-PVn, W1-Wn) and to the load (LS1-LSn), so as to balance the electric power supplied to the electrical network (1) by the renewable source generator means (PV1-PVn, W1-Wn) and by the conventional generator means (G1-Gn), thereby complying with the load (LS1-LSn) power demand.

9. Apparatus according to claim 8, further comprising a master control (MC) for the conventional source generator means (G1-Gn), autonomous and without physical interaction with respect to the Hybrid Grid Smart Control (HGSC).

10. Apparatus according to claims 8 or 9, further comprising a battery storage system (BESS) operatively connected to the Hybrid Grid Smart Control (HGSC).

11. Apparatus according to any of claims 8 to 10, wherein the Hybrid Grid Smart Control (HGSC) comprises means for data acquisition and evaluation of set-points to be provided to renewable source generator means (PV, W1-W4).

12. Apparatus according to any of claims 8 to 11, wherein the renewable generator means (PV1-PVn, W1-Wn) comprise inverter means for inverting the electrical current, a controller and data acquisition system (SCADA) which receives set-point information and provide them to the inverters.

**13.** Apparatus according to any of claims 8 to 12, wherein the renewable generator means (PV, W1-W4) comprise inverter means for inverting the electrical current, which receives set-point information and operate at least one among the following operations: power limiting control, reactive power control, instantaneous power cut, limitation of ramp up, internal droop control.

**14.** Apparatus according to any of claims 10 to 13, wherein the battery storage system (BESS) comprises means for carrying out a droop control.

**15.** Apparatus according to any of claims 8 to 14, wherein the Smart Control makes the power provided by conventional generators (G1-Gn) to be always higher than a minimum threshold, so that the generators run above their minimum power and the spinning reserve satisfies the expected maximum variations of load/ generation.

**16.** Apparatus according to any of claims 8 to 15, wherein the functions of the Smart Control (HGSC) are split between a central unit and the field devices like inverters, battery storage system (BESS) and remote switches.

Fig. 1

(Prior art)

Fig. 2

Fig. 3

Fig. 4

• 98 percentile - 30" Time Step    • 98 percentile - 5' Time Step    • 98 percentile - 1' Time Step

Fig. 5

Fig. 6

| Applicability | Function | ID | Equation |
|---|---|---|---|
| Electrical System | Active Power Control | ESPC | $P_{HGSC} \geq P_{MBL}$ |
| | Reactive Power Control | ESQC | $Q_{sp} = Q_{load} \times k_{VAR}$ |
| | Load Shedding | ESLS | Customized |
| | Generator Shedding | ESGS | Customized |
| Renewable Sources | Ramp Up Limitation | RSRL | $\dfrac{dP_{renew}}{dt} \leq P_{ramp\ up}$ |
| | Droop Control | RSDC | $\dfrac{\Delta P_{renew}}{P_{rated}} = k \cdot \dfrac{\Delta f}{f_{rated}}$ |
| BESS | Droop Control | BEDC | $\dfrac{\Delta P_{BESS}}{P_{rated}} = k \cdot \dfrac{\Delta f}{f_{rated}}$ |

Fig. 7

| ID | Centralized control HGSC central unit | Distributed controls | | | |
| --- | --- | --- | --- | --- | --- |
| | | Renewable SCADA | Renewable Inverter | BESS | Remote I/O |
| ESPC | Data acquisition<br>Evaluation of set-point<br>Set-point to SCADA | Receiving set point<br>Sub-division of set point<br>Set points to inverters | Receiving set point<br>MTTP control<br>Power limiting control | - | Measurements to HGSC |
| ESQC | Data acquisition<br>Evaluation of set-point<br>Set-point to SCADA | Receiving set point<br>Sub-division of set point<br>Set points to inverters | Receiving set point<br>Reactive power control | - | Measurements to HGSC |
| ESLS | Data acquisition<br>Pre-calculus of LS<br>Results to RIO | - | - | - | Measurements to HGSC<br>Receiving HGSC results<br>Critical event detection<br>Open command |
| ESGS | Data acquisition<br>Pre-calculus of LS<br>Results to RIO and SCADA | Receiving HGMC results<br>Receiving RIO commands<br>Limit value to inverter | Limit value to inverter<br>Instantaneous power cut | - | Measurements to HGSC<br>Receiving HGSC results<br>Critical event detection<br>Open command |
| RSRL | Limit value from HMI<br>Limit value to SCADA | Receiving limit value<br>Limit value to inverter | Receiving limit value<br>Limitation of ramp up | - | - |
| RSDC | - | - | Internal droop control | - | - |
| BEDC | - | - | - | Internal droop control | - |

Fig. 8

EP 2 955 807 A1

EP 2 955 807 A1

Fig. 9

Fig. 10

EP 2 955 807 A1

Fig. 11

Fig. 12

Power house

MASTER

G  G  G  G

HGSC central unit

ESQC control

Main switchgear

$Q_{load}$

SCADA

Renewable sources

Loads

Fig. 13

Fig. 14

Fig. 15

Fig. 16

Fig. 17

Fig. 18

Europäisches
Patentamt

European
Patent Office

Office européen
des brevets

# EUROPEAN SEARCH REPORT

**Application Number**

EP 14 42 5073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/002032 A1 (MORI SHIGEKI [JP] ET AL) 3 January 2013 (2013-01-03) | 1-12,16 | INV. H02J3/06 |
| Y | * Equation 1; paragraphs [0005], [0016] - [0018], [0031] - [0039], [0043] - [0050], [0065], [0091] - [0096]; figures 1,2 * | 13,14 | H02J3/32 H02J3/38 |
| | ----- | | ADD. H02J3/04 |
| X | US 2014/163755 A1 (POTTER DAVID [US] ET AL) 12 June 2014 (2014-06-12) | 1-3,7,8, 10,15,16 | H02J3/46 |
| | * paragraphs [0010], [0033] - [0041], [0062], [0086], [0095]; figure 1 * | | |
| | ----- | | |
| Y | US 2014/097683 A1 (PIYABONGKARN DAMRONGRIT [US] ET AL) 10 April 2014 (2014-04-10) | 14 | |
| A | * paragraphs [0046], [0048], [0063], [0081]; figures 7,10 * | 3,10 | |
| | ----- | | |
| Y | "Wind Turbines Connected to Grids with Voltages above 100kV", INTERNET CITATION, 3 December 2004 (2004-12-03), pages 1-34, XP002542209, Retrieved from the Internet: URL:http://www.energinet.dk/NR/rdonlyres/E 066A026-B4E1-4D5E-A729-80AC5458036A/0/Wind TurbinesConnectedtoGridswithVoltageabove10 0kV.pdf [retrieved on 2009-08-14] | 13 | TECHNICAL FIELDS SEARCHED (IPC) H02J |
| A | * pages 8-9; figure 5 * * Appendix 2, pages i to v * | 2,16 | |
| | ----- | | |

The present search report has been drawn up for all claims

| Place of search | Date of completion of the search | Examiner |
|---|---|---|
| Munich | 11 December 2014 | Varela Fraile, Pablo |

EPO FORM 1503 03.82 (P04C01)

## ANNEX TO THE EUROPEAN SEARCH REPORT
## ON EUROPEAN PATENT APPLICATION NO.

EP 14 42 5073

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2014

| Patent document cited in search report | Publication date | Patent family member(s) | Publication date |
|---|---|---|---|
| US 2013002032 A1 | 03-01-2013 | JP 2013013178 A<br>US 2013002032 A1 | 17-01-2013<br>03-01-2013 |
| US 2014163755 A1 | 12-06-2014 | US 2014163755 A1<br>WO 2014092822 A1 | 12-06-2014<br>19-06-2014 |
| US 2014097683 A1 | 10-04-2014 | US 2014097683 A1<br>WO 2014058571 A2 | 10-04-2014<br>17-04-2014 |

EPO FORM P0459

For more details about this annex : see Official Journal of the European Patent Office, No. 12/82